# EUROPEAN PATENT SPECIFICATION

(11) **EP 4 080 759 B1**
(45) Date of publication and mention of the grant of the patent: **29.11.2023**
(21) Application number: 22168676.9
(22) Date of filing: 15.04.2022
(51) Int. Cl.: H02S 50/00, H02S 40/10, H02S 40/22

(54) **PHOTOVOLTAIC PANEL SYSTEM AND RESPECTIVE METHOD OF SAFE OPERATION**
PHOTOVOLTAISCHES PANEELSYSTEM UND ENTSPRECHENDES VERFAHREN ZUM SICHEREN BETRIEB
SYSTÈME DE PANNEAUX PHOTOVOLTAÏQUES ET MÉTHODE RESPECTIVE DE FONCTIONNEMENT SÛR

(30) Priority: 19.04.2021 IT 202100009884
(43) Date of publication of application: 26.10.2022
(73) Proprietor: Ragonese, Giuseppe, 90046 Monreale (PA) (IT); Termini, Donatella, 90145 Palermo (PA) (IT)
(72) Inventor: Ragonese, Giuseppe, 90046 Monreale (PA) (IT); Termini, Donatella, 90145 Palermo (PA) (IT)
(74) Representative: Ercolani, Simone Pietro

(56) References cited:
- EP-A1- 2 670 015
- WO-A1-2019/030996
- CN-A- 104 917 458
- CN-A- 110 224 440
- CN-A- 111 147 018
- CN-U- 207 910 482
- DE-A1-102004 028 622
- DE-A1-102020 119 926

## Description

### FIELD OF THE INVENTION

The present invention relates to a photovoltaic panel system and related method of safe operation.

### BACKGROUND ART NOTE

It is known the existence of photovoltaic panel systems which comprise tripping means to alert staff to any critical situations of one or more panels leading to dangerous situations such as those mainly due to initiation of fire or of electrical nature.

For example, document CN207910482U describes a photovoltaic panel system that is able to alert staff to dangerous situations thanks to a control unit of the photovoltaic panel system itself. This control unit comprises a combination box, a low frequency oscillation control inverter, an environmental data collection module, a remote control center, a power distribution cabinet, a battery and a transformer. The output port of the generic PV module is electrically connected to the input port of the inverter via the combination box. The two inverter output ports are electrically connected, respectively, to the environmental data collection module and to the energy power distribution cabinet. The environmental data collection module is connected to the remote control center. One output port of the power distribution cabinet is electrically connected to the battery, while the other output port is electrically connected to the high voltage supply network via a transformer. The control unit also comprises a drone placed on one side of the photovoltaic module and a fault monitoring device provided on the drone. The drone comprises an infrared camera attached to the bottom of the drone's central disc, a data processor, and a transmitter attached to the end of the central disc. The infrared camera is connected to the control board, the data processor is placed under the protective cover, the data processor is electrically connected to the control board, while the signal transmitter is connected to the control board and to the center remote control, respectively. In operation, when performing fault detection on a string of photovoltaic panels of the monitored panel system, the drone is guided to fly over the photovoltaic module of interest. When the drone flies over the photovoltaic module, which comprises multiple solar panels, the infrared camera captures the image of the photovoltaic module. The infrared camera then transmits the acquired image data to the control board which, in turn, will process the data through the control data processor and, through the signal transmitter, will send the processed image data to the remote control center. The remote control center will perform the analysis of the captured image to obtain the results of the analysis, then it will perform any actions for the maintenance of the faults on the PV plant based on the results of the analysis. These maintenance actions are carried out by the staff present at the photovoltaic panel system.

The document CN111147018A also describes a monitoring system to observe the operating status of a photovoltaic panel system. The monitoring system comprises a data acquisition system and an alarm system. An electrical power measurement system allows to obtain various electrical parameters of the output extreme of the photovoltaic solar center, while the operating status of the photovoltaic solar center is judged according to an oscillogram, and the eventual critical issues are identified in real time.

An module of the environmental monitoring is used to detect the surface temperature of the photovoltaic solar panel and the environmental status of the solar photovoltaic center, so that the protective measures can be taken when the surface temperature of the photovoltaic solar panel is too high or the photovoltaic solar center exceeds a pre-established criticality level.

Through a camera, an infrared sensor and a pressure sensor in the alarm system, the safety status of the photovoltaic solar center is continuously monitored. In particular, according to this solution, the various electrical parameters outgoing from the photovoltaic solar center are obtained through a power measurement system and are converted into electrical waveforms and sent to the central processing module through a wireless communication module. The central processing module stores the electrical waveforms received in the system and compares them with the waveforms of the photovoltaic solar panels to determine the operating status of the solar photovoltaic panel. If the two sets of electrical waveforms do not overlap properly, the power system of the solar PV plant may not function properly. The alarm system will send an alarm request after receiving the abnormal signal to notify the staff in time the presence of the fault and to manage it. The environmental detection module is used to detect the surface temperature of the photovoltaic solar panel and the environmental status of the photovoltaic solar center, useful for taking any protective measures when the surface temperature of the photovoltaic solar center is too high or the photovoltaic center is in a difficult location to provide a good protection. Finally, the camera, the infrared sensor and the pressure sensor of the alarm system are used for real-time monitoring of the security status of the solar photovoltaic center during the day. The camera captures the images of the control panel in real time. These images are sent to a display module via the wireless communication module to facilitate staff monitoring. The infrared sensor is used to monitor the entering of external objects and the pressure sensor is used to monitor if the photovoltaic solar panel has been hit by it. In the case of damage, the alarm system intervenes to better monitor the operating status of the photovoltaic solar center. Also in this case, after that the alarm has been signaled, the staff intervenes to check the problems of the alerted photovoltaic panel and, if necessary, restore its perfect functioning.

The document DE102004028622 A1 discloses a solar energy conversion system comprising shutters, which can automatically cover either completely or partially the solar energy conversion system, wherein the covering is regulated by a control unit, depending on the solar module temperature.

Finally, the document CN110224440 describes a optimization system for generating power of the photovoltaic modules having a wireless networking function. The optimization system of the generation power of the photovoltaic module comprises a photovoltaic module, a photovoltaic module monitor, a data receiving processor, and an intelligent monitoring system platform, in which the photovoltaic module comprises a plurality of photovoltaic panels. The monitor of the photovoltaic module is arranged on each photovoltaic panel in the photovoltaic module and comprises a junction box of the photovoltaic module, an intelligent grid link monitoring module, and an inverter. The monitoring module linked in the intelligent grid and the inverter are also arranged in the junction box of the photovoltaic module. The monitoring module linked in the intelligent grid has a wireless auto-networking function. The monitoring and sampling of a voltage, a current and a power value of a single photovoltaic module are carried out by the monitor of the photovoltaic module. The data are sent to a data receiving processor for the elaboration. The data receiving processor is used for data elaboration in order to send, then, the data to the intelligent monitoring system platform via a wireless transmission mode. The intelligent monitoring system platform is used to process the received data and then to send the data to a photovoltaic system operator, a photovoltaic system user, a photovoltaic module factory or an inverter factory.

Also in this case, therefore, when a dangerous situation arises for one or more photovoltaic panels, the operator intervenes to interrupt or to restore the correct functioning of the photovoltaic panel or of panels indicated as not functioning correctly. In any case, this interruption and/or restoration of the operation of the photovoltaic panel(s) is left to both the availability in the field and the experience of the operators. In the case in which that maintenance intervention is not carried out promptly or with the necessary experience, the risks associated with fires and disastrous damage to the system are always present.

The purpose of the present invention is to realize a photovoltaic system which further increases the safety level of the current photovoltaic panel systems and allows an intelligent maintenance.

A further object of the present invention is to provide a photovoltaic system which, without any delay, allows to identify, restore or interrupt the operation of photovoltaic panels that are not functioning properly.

Still, the object of the present invention is to provide a method of operation of a photovoltaic panel system which allows them to be monitored and to be safer and more affidabile**.**

### SUMMARY OF THE INVENTION

These for other purposes are achieved by means of a photovoltaic panel system according to one or more of the attached claims.

The subject matter of the present invention is a photovoltaic system according to claim 1. Preferred aspects are indicated in the dependent claims.

According to a possible aspect of the invention, the photovoltaic panel system comprises a plurality of photovoltaic panels, said system comprising detecting means for detecting the electrical data output from each photovoltaic panel of said plurality of photovoltaic panels or from one or more arrays of photovoltaic panels of said plurality of photovoltaic panels, and a control unit able to receive said electrical data detected by said detecting means, said system further comprising tripping and restoring means for interrupting the electrical operation of one or more photovoltaic panels of said plurality of photovoltaic panels and for restoring the proper operation of one or more photovoltaic panels of said plurality of photovoltaic panels, said tripping and restoring means being driven by said control unit depending on the data detected on each panel photovoltaic during their operation. In this way, the intervention and/or restoration of any malfunctioning photovoltaic panels is carried out in a timely manner, without any delay, and without being left to the experience and/or efficiency of personnel who must be on site.

Still according to the invention, said tripping and restoring means comprise, for each photovoltaic panel of said plurality of photovoltaic panels, a front cover for obscuring at least in part the face collecting the solar, wherein the said cover comprises a roll-up/roll-down sheet.

This makes it possible to reduce or, at the limit, bring to zero the electrical voltage output from the photovoltaic panel(s) reported to be subjected to critical conditions. In fact, the said cover allows to partially or totally cover the collection surface and, therefore, prevent the photovoltaic panel from producing electricity.

Furthermore, said tripping and restoring means comprise, for each photovoltaic panel of said plurality of photovoltaic panels, a back cover which, in cooperation with said front cover, implements a substantially hermetic compartment, at least when said front cover obscures the face collecting the solar radiation. In the case of a fire, therefore, the combustion of the photovoltaic panel would stop due to a lack of comburent.

Again, in accordance with the invention, said tripping and restoring means comprise, for each photovoltaic panel of said plurality of photovoltaic panels, a device for cleaning the face collecting the solar radiation. Advantageously, said cleaning means comprise a brush. In particular, this brush is located at the end of the cover sheet and operates at the same time as the cover sheet is lowered onto the capture surface of the photovoltaic panel undergoing the intervention. This brush is made up of particular bristles that allow you to remove different types of elements such as, for example, dust, sand, snow, bird droppings, etc... possibly present on the photovoltaic panel.

In addition, the photovoltaic panel system characterized by comprising receiving/transmitting means for exchanging data between said one or more panels, said control unit and said tripping/restoring means.

These receiving/transmitting means allow the exchange of data via internet. In this way, the control unit can also be located in another place with respect to the one in which the photovoltaic panel system is located, however, thanks to said data receiving/transmitting means it is possible to process the information coming in real time from the panels and quickly return the result of that analysis. The control unit can also send information to monitoring and control stations and/or smartphones for continuous verification, in this case, by one or more operators of the functioning of the photovoltaic panel system.

According to the invention, said electrical data comprise the electric voltage, current intensity and/or power of each photovoltaic panel of said photovoltaic panel apparatus, or of said one or more arrays of photovoltaic panels of said plurality of photovoltaic panels.

The purposes of the invention are achieved by means of a method of safe operation of a photovoltaic panel system according to one or more of claims 1 to 4, comprising the steps of:
a) detecting the electrical data output from each photovoltaic panel of said plurality of photovoltaic panels, or from one or more arrays of photovoltaic panels of said plurality of photovoltaic panels;
b) transmitting said electrical data detected during said step a) to a control unit; characterized by comprising the step c) of interrupting the electric operation of one or more photovoltaic panels of said plurality of photovoltaic panels and/or restoring the proper operation of one or more photovoltaic panels of said plurality of photovoltaic panels, said tripping and/or restoring means being driven by said control unit depending on the data detected on each photovoltaic panel during their operation.

Furthermore, prior to said step a), step a0) of detecting said plurality of known electrical data as the temperature recorded on the face collecting the solar radiation of each photovoltaic panel varies, and/or step a0') of obtaining a plurality of known electrical data as the temperature recorded on the face collecting the solar radiation of each photovoltaic panel varies, and the step a0") of training a neural network with said electrical values detected during said step a0) and/or obtained during said step a0') are comprised, so that to determine the electric value thresholds at the exceeding of which said step c) is carried out.

Furthermore, said step a0) and/or said step a0') comprise(s) the step of correlating the thermographic data of each photovoltaic panel, which are preferably obtained through images of thermocameras, with the electrical data generated by the photovoltaic panel by the effect of the solar radiation, according to the environmental conditions.

### BRIEF DESCRIPTION OF THE FIGURES

These and other advantages will be evident from the following description and the attached figures, reported here for illustrative and non-limiting purposes, in which:
- Figure 1 shows a simplified plan view of a photovoltaic panel system according to the invention;
- Figure 2A shows a side view of a generic photovoltaic panel of the system according to the invention when the face collecting the solar radiation is not yet covered;
- Figure 2B shows a side view of a generic photovoltaic panel system according to the invention when the face collecting the solar radiation is partially covered;
- Figure 2C shows a side view of a generic photovoltaic panel system according to the invention when the face collecting the solar radiation is completely covered.

### DETAILED DESCRIPTION OF A PREFERRED EMBODIMENT OF THE PRESENT INVENTION

With particular reference to these figures, 1 indicates a photovoltaic panel system according to the invention.

The figure shows a photovoltaic panel system 1 which comprises four photovoltaic panels 2a, 2b, 2c, 2d. It should be noted that the number of photovoltaic panels mentioned here is only an example, therefore the number of photovoltaic panels may also be lower or higher than that indicated above without thereby departing from the scope of protection of the present invention. The system 1 comprises detecting means 3 for electrical data output from each photovoltaic panel 2a, 2b, 2c, 2d, and a control unit 4 able to receive said electrical data detected by said detecting means 3. The said electrical data comprise the electric voltage, current intensity and/or power of each photovoltaic panel 2a, 2b, 2c, 2d. In other embodiments of the invention, the said electrical data comprise the electrical voltage, current intensity and/or the power of arrays of photovoltaic panels. For example, the pair of photovoltaic panels 2a, 2b, and the pair of photovoltaic panels 2c, 2d constitute two distinct arrays of photovoltaic panels.

The electrical data are obtained through suitable measurement systems of voltage, intensity of electric current and electric power 30 arranged along the output line of each photovoltaic panel 2a, 2b, 2c, 2d. In other embodiments, the electrical data may also comprise only the intensity of the electric current and the electrical power, or only the voltage, without thereby departing from the scope of protection of the present invention.

Furthermore, the system 1 also comprises tripping and restoring means 5 for interrupting the electrical operation of one or more of the photovoltaic panels 2a, 2b, 2c, 2d and/or for restoring the proper operation of one or more photovoltaic panels 2a, 2b, 2c, 2d of system 1.

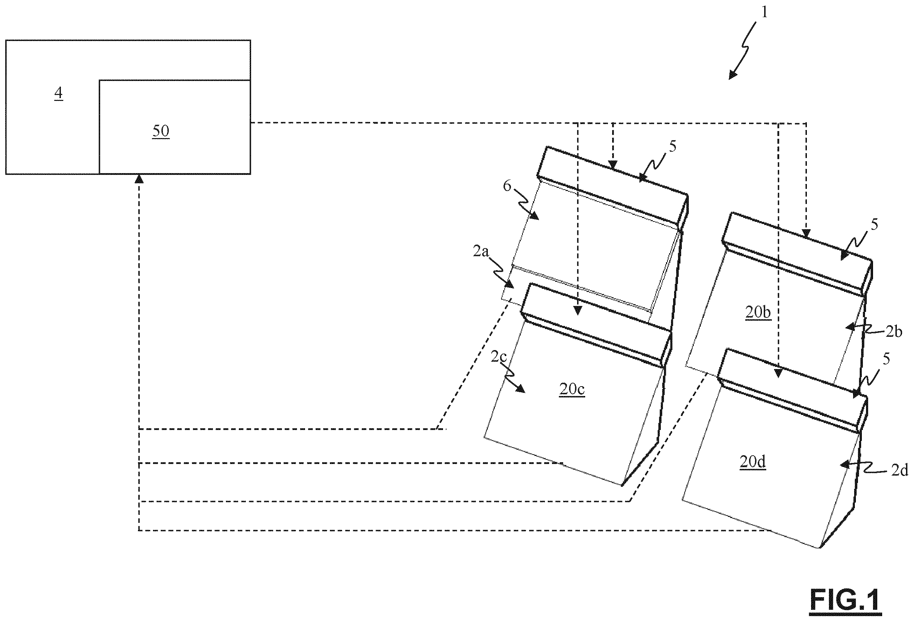

Advantageously, tripping and restoring means 5 are driven by said control unit 4 depending on the data detected on each photovoltaic panel 2a,2b,2c,2d during their operation. In figure 1, for example, the tripping and restoring means 5 is shown if it has been signaled by the control unit 4 that the panel 2a is in critical conditions. In particular, according to the embodiment described here, these detected data are introduced into a neural network which has been trained through the use of a plurality of known electrical data detected on each photovoltaic panel 2a, 2b, 2c, 2d of the system 1, or on photovoltaic panels of other similar systems, as the temperature recorded on the face collecting the solar radiation 20a, 20b, 20c, 20d of each photovoltaic panel 2a, 2b, 2c, 2d and/or on the face collecting the solar radiation of each panel photovoltaic from another plant for which the historical series of electrical values have been obtained. In this way, the neural network can recognize the exceeding of certain thresholds of voltage, electric current and/or power values which can correspond to both critical conditions of the operation of the photovoltaic panel that can prove to be anomalous with respect to the ordinary values of production and/or dangerous for the solar panel itself and which must be signaled by the control unit 4 to the tripping and restoring means 5.

Advantageously, the tripping and restoring means 5 comprise, for each photovoltaic panel 2a, 2b, 2c, 2d, a front cover 6 for obscuring at least in part the face collecting the solar radiation 20a, 20b, 20c, 20d. The darkening of the face collecting the solar radiation 20a, 20b, 20c, 20d immediately causes the cancellation of the electrical voltage at the output of the photovoltaic panel, therefore it is necessary to intervene following the analysis carried out by the control unit 4 on the basis of the electrical data from photovoltaic panels 2a, 2b, 2c, 2d of system 1.

More particularly, the front cover 6 comprises a roll-up/roll-down sheet.

Once the photovoltaic panel 2a is considered out of danger, the tripping and restoring means 5 are activated by the control unit 4 to allow to restore the standard working condition of the photovoltaic panel 2a and, therefore, allowing the front cover 6 to be rolled-up.

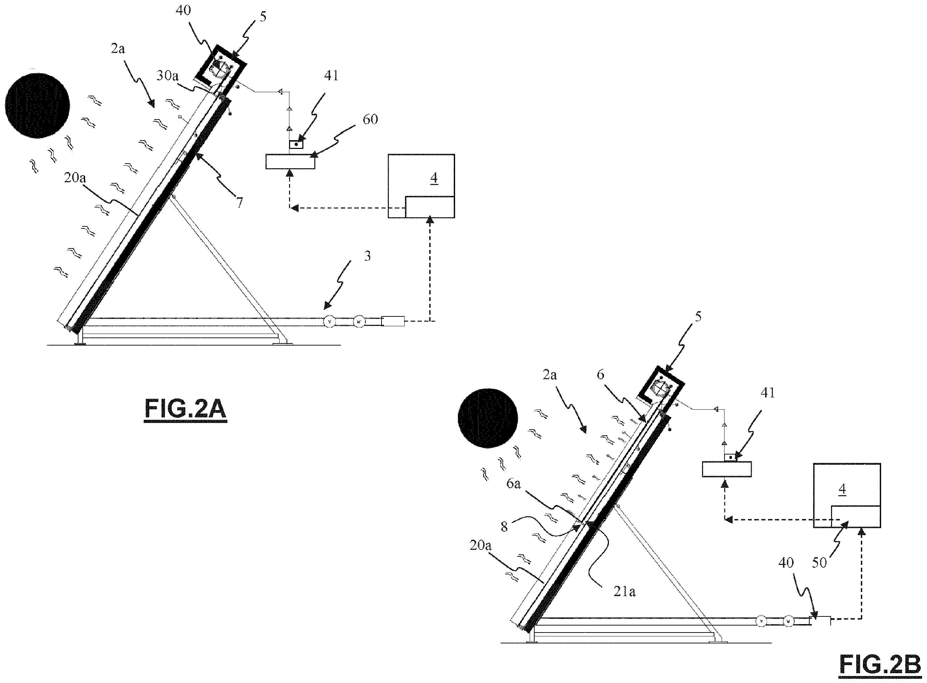

Figure 2A shows a side view of a photovoltaic panel 2a of the photovoltaic panels 2a, 2b, 2c, 2d, making up system 1. The front cover 6 can be rolled up around a shaft 40 located near the upper side 30a of the photovoltaic panel 2a. The shaft 40 is coupled with an electric motor 41 which is controlled in its rolling up or unrolling by the control unit 4. Both the shaft 40 and the electric motor 41 are part of the tripping and restoring means 5. This electric motor 41 can be powered by a photovoltaic panel 2a of the plurality of photovoltaic panels of system 1.

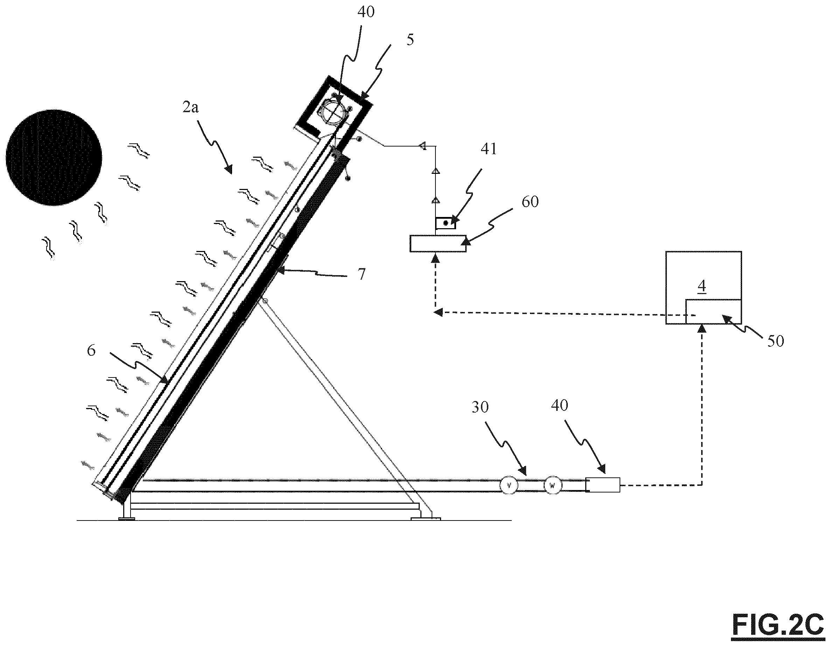

Still according to the invention, and as shown in Figure 2A, the tripping and restoring means 5 comprises, for each photovoltaic panel 2a, 2b, 2c, 2d, a back cover 7 which, in cooperation with said front cover 6, implements a substantially hermetic compartment, at least when said front cover 6 fully obscures the face collecting the solar radiation 20a, 20b, 20c, 20d. In figure 2B, in particular, the front cover 6 is shown which only partially covers the face collecting the solar radiation 20a of the photovoltaic panel 2a. Finally, figure 2C shows the front cover 6 which completely covers the face collecting the solar radiation 20a of the photovoltaic panel 2a and, therefore, determines the cancellation of the electrical voltage output from the photovoltaic panel 2a.

Furthermore, the tripping and restoring means 5 comprise, for each photovoltaic panel 2a, 2b, 2c, 2d, a device 21a, 21b, 21c, 22d for cleaning the face collecting the solar radiation 20a, 20b, 20c, 20d.

In the embodiment described here, the cleaning means 21a, 21b, 21c, 21d (the devices 21b-21d have not been shown, but are identical to the device 21a shown in figure 2B in relation to the panel 2a) comprise a brush 8. In particular, the brush 8 is located at the end 6a of the front cover 6 of each photovoltaic panel 2a, 2b, 2c, 2d, so that, when the cover 6 is operated to close the face collecting the solar radiation 20a, 20b, 20c, 20d, the brush 8 cleans the face collecting the solar radiation 20a, 20b, 20c, 20d. In practice, therefore, both the intervention to cover the face collecting the solar radiation 20a, 20b, 20c, 20d of one or more photovoltaic panels 2a, 2b, 2c, 2d, and the cleaning of the face collecting the solar radiation 20a, 20b, 20c, 20d can occur simultaneously.

In an alternative example, which is not part of the present invention, the cleaning device 21a, 21b, 21c, 21d can also comprise a water tank equipped with an opening, a valve to allow or not the passage of the water contained in the tank and systems for the canalization of water that comes out of the tank on the face collecting the solar radiation 20a, 20b, 20c, 20d of the photovoltaic panel 2a, 2b, 2c, 2d.

The opening and closing of the said valve can be synchronized to that of the signal for the activation of the tripping and/or restoring means 5.

The tank can advantageously be positioned above of the photovoltaic panel 2a to avoid the use of a pump.

According to the invention, each photovoltaic panel 2a, 2b, 2c, 2d comprises first transmitting means 40 for electrical data from each photovoltaic panel 2a, 2b, 2c, 2d to the control unit 4. Furthermore, the control unit 4 comprises second receiving means 50 of the the electrical data for each panel 2a, 2b, 2c, 2d and for transmitting command instructions for tripping and restoring means 5. Furthermore, the tripping and restoring means 5 are also equipped with third elements 60 for receiving the command instructions. Said first 40, second 50 and third 60 data transmitting and/or receiving means can comprise antennas for data exchange also via internet.

The method of operation of the photovoltaic system 1 described above comprises the steps of:
a) detecting the electrical data output from each photovoltaic panel 2a, 2b, 2c, 2d, or from one or more array of the system 1;
b) transmitting electrical data detected during step a) to a control unit 4; advantageously the step c) of interrupting the electric operation of one or more photovoltaic panels 2a, 2b, 2c, 2d of the photovoltaic panel system 1 and/or restoring the proper operation of one or more photovoltaic panels 2a, 2b, 2c, 2d of system 1; said tripping and restoring means 5 are driven by the control unit 4 depending on the data detected on each photovoltaic panel 2a,2b,2c,2d during their operation. In particular, as mentioned above, these detected data are introduced into a neural network that has been trained through the use of a plurality of known electrical data detected on each photovoltaic panel 2a, 2b, 2c, 2d, or on more arrays of photovoltaic panels, as the temperature, that can be recorded on the face collecting the solar radiation 20a, 20b, 20c, 20d of each photovoltaic panel 2a, 2b, 2c, 2d, varies. In this way, the neural network can recognize the exceeding of certain thresholds of voltage, electric current and/or power values which may be dangerous for the solar panel itself and which must be signaled by the control unit 4 to the tripping and restoring means 5.

Again according to the method, prior to step a), it is compised the step a0) of detecting the plurality of known electrical data as the temperature, that can be recorded on the face collecting the solar radiation 20a, 20b, 20c, 20d of each photovoltaic panel 2a, 2b, 2c, 2d, varies, and the step a0") of training a neural network with these electrical values detected during step a0) in such a way as to determine the thresholds of electrical values such as voltage, electric current and/or power, exceeded which step c) is carried out.

In particular, step a0) comprises the step of correlating the thermographic data of each photovoltaic panel 2a, 2b, 2c, 2d, preferably obtained through images of thermocameras, with the electrical data generated by the photovoltaic panel 2a, 2b, 2c, 2d by the effect of the solar radiation, according to the environmental conditions. In another embodiment, prior to said step a), it is comprised step a0') of obtaining a plurality of known electrical data as the temperature, recorded on the face collecting the solar radiation of each photovoltaic panel of another photovoltaic system, varies. Therefore, the step a0") of training a neural network is realized through the data obtained during the step a0') in such a way as to determine the thresholds of electrical values such as voltage, electric current and/or power, exceeded which said step c) is carried out. Step a0") can also take place by combining the results obtained during steps a0) and a0').

## Claims

1. Photovoltaic panel system (1) comprising a plurality of photovoltaic panels (2a, 2b, 2c, 2d), said system comprising detecting means (3) for detecting the electrical data output from each photovoltaic panel (2a;2b;2c;2d) of said plurality of photovoltaic panels, and a control unit (4) able to receive said electrical data detected by said detecting means (3), said system being **characterized by** further comprising tripping and restoring means (5) for interrupting the electric operation of one or more photovoltaic panels of said plurality of photovoltaic panels and for restoring the proper operation of one or more photovoltaic panels of said plurality of photovoltaic panels, said tripping and restoring means (5) being driven by said control unit (4) depending on the data detected on each photovoltaic panel (2a,2b,2c,2d) during their operation, wherein said tripping and restoring means (5) comprise, for each photovoltaic panel of said plurality of photovoltaic panels, a front cover (6) for obscuring at least in part the face collecting the solar radiation, said cover comprising a roll-up/roll-down sheet, said tripping and restoring means (5) comprising, for each photovoltaic panel of said plurality of photovoltaic panels, a device for cleaning the face collecting the solar radiation, said cleaning means comprising a brush (8), wherein said brush (8) is located at an end (6a) of the front cover (6) of each photovoltaic panel (2a, 2b, 2c, 2d).

2. Photovoltaic panel system according to claim 1, wherein said tripping and restoring means (5) comprise, for each photovoltaic panel of said plurality of photovoltaic panels, a back cover (7) which, in cooperation with said front cover (6), implements a substantially hermetic compartment, at least when said front cover fully obscures the face collecting the solar radiation.

3. Photovoltaic panel system according to one or more of the preceding claims, further comprising receiving/transmitting means for exchanging data between said one or more panels, said control unit and said tripping/restoring means.

4. Photovoltaic panel system according to one or more of claims 1 to 3, wherein said electrical data comprise the electric voltage, current intensity and/or power of each photovoltaic panel of said photovoltaic panel apparatus, or of said one or more arrays of photovoltaic panels of said plurality of photovoltaic panels.

## Patentansprüche

1. Photovoltaik-Paneelsystem (1), das eine Vielzahl von Photovoltaikpaneelen (2a, 2b, 2c, 2d) aufweist, wobei das System Erfassungsmittel (3) zum Erfassen der von jedem Photovoltaikpaneel (2a; 2b; 2c; 2d) der Vielzahl von Photovoltaikpaneelen ausgegebenen elektrischen Datenausgabe aufweist und eine Steuereinheit (4) aufweist, die in der Lage ist, die von der Erfassungsmittel (3) erfassten elektrischen Daten zu empfangen, wobei das System **dadurch gekennzeichnet ist, dass** es weiterhin Auslöse- und Wiederherstellungsmittel (5) umfasst, um den elektrischen Betrieb eines oder mehrerer Photovoltaikpaneele der Vielzahl von Photovoltaikpaneelen zu unterbrechen und den ordnungsgemäßen Betrieb eines oder mehrerer Photovoltaikpaneele der Vielzahl von Photovoltaikpaneelen wiederherzustellen, wobei die Auslöse- und Wiederherstellungsmittel (5) von der Steuereinheit (4) in Abhängigkeit von den Daten angesteuert werden, die an jedem Photovoltaikpaneel (2a, 2b, 2c, 2d) während ihres Betriebs erfasst werden, wobei die Auslöse- und/oder Wiederherstellungsmittel (5) für jedes Photovoltaikpaneel der Vielzahl von Photovoltaikpaneelen eine Frontabdeckung (6) zum zumindest teilweisen Verdecken der die Sonnenstrahlung sammelnden Fläche umfassen, wobei die Abdeckung eine aufrollbare/abrollbare Folie umfasst, wobei die Auslöse- und Wiederherstellungsmittel (5) für jedes Photovoltaikpaneel der Vielzahl von Photovoltaikpaneelen eine Vorrichtung zum Reinigen der die Sonnenstrahlung sammelnden Fläche umfassen, wobei die Reinigungsvorrichtung eine Bürste (8) umfassen, wobei die Bürste (8) an einem Ende (6a) der Frontabdeckung (6) von jedem Photovoltaikpaneel (2a, 2b, 2c, 2d) lokalisiert ist.

2. Photovoltaik-Paneelsystem nach Anspruch 1, **dadurch gekennzeichnet, dass** die Auslöse- und Wiederherstellungsmittel (5) für jedes Photovoltaikpaneel der Vielzahl von Photovoltaikpaneelen eine hintere Abdeckung (7) umfassen, die im Zusammenwirken mit der Frontabdeckung (6) zumindest dann, wenn die Frontabdeckung die Fläche, die die Sonnenstrahlung sammelt, vollständig verdeckt, ein im Wesentlichen hermetisches Kompartment realisiert.

3. Photovoltaik-Paneelsystem nach einem oder mehreren der vorhergehenden Ansprüche, **dadurch gekennzeichnet, dass** es überdies Empfangs- /Sendemittel zum Austausch von Daten zwischen dem einen oder den mehreren Paneelen, der Steuereinheit und den Auslöse- und Wiederherstellungsmitteln umfasst.

4. Photovoltaik-Paneelsystem nach einem oder mehreren der Ansprüche 1 bis 3, **dadurch gekennzeichnet, dass** die elektrischen Daten die elektrische Spannung, Stromstärke und/oder Leistung jedes Photovoltaikpaneels der Photovoltaikpaneelvorrichtung oder des einen oder der mehreren Arrays von Photovoltaikpaneelen der Vielzahl von Photovoltaikpaneelen umfassen.

## Revendications

1. Système de panneaux photovoltaïques (1) comprenant une pluralité de panneaux photovoltaïques (2a, 2b, 2c, 2d), ledit système comprenant des moyens de détection (3) pour détecter les données électriques en sortie de chaque panneau photovoltaïque (2a;2b;2c;2d) de ladite pluralité de panneaux photovoltaïques, et une unité de commande (4) capable de recevoir lesdites données électriques détectées par lesdits moyens de détection (3), ledit système étant **caractérisé par le fait qu'**il comprend en outre des moyens de déclenchement et de restauration (5) pour interrompre le fonctionnement électrique d'un ou de plusieurs panneaux photovoltaïques de ladite pluralité de panneaux photovoltaïques et pour restaurer le bon fonctionnement d'un ou de plusieurs panneaux photovoltaïques de ladite pluralité de panneaux photovoltaïques, lesdits moyens de déclenchement et de restauration (5) étant pilotés par ladite unité de commande (4) en fonction des données détectées sur chaque panneau photovoltaïque (2a,2b,2c,2d) pendant leur fonctionnement, dans lequel lesdits moyens de déclenchement et de restauration (5) comprennent, pour chaque panneau photovoltaïque de ladite pluralité de panneaux photovoltaïques, un couvercle avant (6) pour obscurcir au moins en partie la face collectant la radiation solaire, ledit couvercle comprenant une feuille enroulable/déroulable, lesdits moyens de déclenchement et de restauration (5) comprenant, pour chaque panneau photovoltaïque de ladite pluralité de panneaux photovoltaïques, un dispositif de nettoyage de la face collectant la radiation solaire, lesdits moyens de nettoyage comprenant une brosse (8), dans lequel ladite brosse (8) est située à une extrémité (6a) du couvercle avant (6) de chaque panneau photovoltaïque (2a, 2b, 2c, 2d).

2. Système de panneaux photovoltaïques selon la revendication 1, dans lequel lesdits moyens de déclenchement et de restauration (5) comprennent, pour chaque panneau photovoltaïque de ladite pluralité de panneaux photovoltaïques, un couvercle arrière (7) qui, en coopération avec ledit couvercle avant (6), met en oeuvre un compartiment sensiblement hermétique, au moins lorsque ledit couvercle avant obscurcit complètement la face collectant la radiation solaire.

3. Système de panneaux photovoltaïques selon l'une ou plusieurs des revendications précédentes, comprenant en outre des moyens de réception/transmission pour l'échange de données entre ledit ou lesdits panneaux, ladite unité de commande et lesdits moyens de déclenchement/restauration.

4. Système de panneaux photovoltaïques selon l'une ou plusieurs des revendications 1 à 3, dans lequel lesdites données électriques comprennent la tension électrique, l'intensité de courant et/ou la puissance de chaque panneau photovoltaïque dudit appareil à panneaux photovoltaïques, ou dudit ou desdits réseaux de panneaux photovoltaïques de ladite pluralité de panneaux photovoltaïques.
